# EUROPEAN PATENT APPLICATION

(11) **EP 3 373 364 A1**
(43) Date of publication of application: **12.09.2018**
(21) Application number: 17159396.5
(22) Date of filing: 06.03.2017
(51) Int. Cl.: H01M 2/20, H01M 10/42, H01M 2/34, H01M 10/0525

(54) **CONNECTOR AND SAFETY ASSEMBLY, CELL ARRANGEMENT, BATTERY, AND APPARATUS**

(71) Applicant: Lithium Energy and Power GmbH & Co. KG, 70469 Stuttgart (DE)
(72) Inventor: LIEBENOW, Cornelius, 70372 Stuttgart (DE)
(74) Representative: Bee, Joachim

(57) **Abstract**

The present invention concerns a connector and safety assembly (40) for a plurality of battery cells (10) and in particular for a cell arrangement (110') or a cell module (110) comprising (i) connector portions (41) in order to electrically connect said plurality of battery cells (10) or a part thereof to first and second terminals (111, 112) and (ii) safety portions (42) in order to conditionally and controllably short-circuit battery cell terminals (11, 12) of battery cells (10) in order to thereby achieve upon activation a fast discharge and/or shut down of one or a plurality of respective battery cells (10), wherein the connector and safety assembly (40) is formed as a single and common unit for said plurality of battery cells (10).

## Description

### State of the Art

The present invention concerns a connector and safety assembly for a plurality of battery cells and in particular for cell arrangement or a cell module, a cell arrangement or a cell module as such, a battery, an apparatus and in particular a vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

JP 2013-247100 discloses a board connection structure for electrically connecting an assembled battery. KR 2015-0123103 refers to a structure for connecting electrode tabs of battery cells in a battery and having means for avoiding an overcharge of the battery cells.

In order to avoid such a hazardous behavior, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

Because of the large amount of energy transferred during a fast discharge and/or shutdown process there is a need for having sufficient heat sink capacities on the one hand without increasing the burden during the assembly process of the battery on the other hand. This cannot be realized at the same time with known battery assemblies.

### Disclosure of the invention

The connector and safety assembly for a plurality of battery cells according to the present invention as defined in independent claim 1, however, has the advantage of enabling a simple and reliable assembly of a plurality of battery cells into a cell module or a battery thereby establishing at the same time comparable short supply lines thereby decreasing the amount of heat generated during a fast discharge and/or shutdown process. This is achieved by a connector and safety assembly for a plurality of battery cells and in particular for a cell arrangement or a cell module (i) configured to and in particular comprising connector portions as means in order to electrically connect said plurality of battery cells or a part thereof to first and second terminals and (ii) configured to and in particular comprising safety portions as means in order to conditionally and controllably short-circuit battery cell terminals of battery cells in order to thereby achieve upon activation a fast discharge and/or shut down of one or a plurality of respective battery cells, wherein the connector and safety assembly is formed as a single and common unit for said plurality of battery cells. The unification of connecting components and of safety components into a single uncommon unit for an entire plurality of battery cells enables fast assembly, for instance of a cell module comprising the plurality of battery cells, on the one hand and the provision of short supply lines on the other hand, thereby continuously yielding a comparable lowered amount of heat externally generated in case of an fast discharge and/or shut down process.

The dependent claims contain advantageous embodiments of the present invention.

According to a preferred embodiment of the present invention the safety aspects may be established by having the connector and safety assembly with safety portions configured and arranged in order to achieve a fast discharge and/or shut down of battery cells by short-circuiting said battery cells in a group wise, pairwise and/or individual manner.

In practical embodiments, the pairwise or the individual short-circuiting of the battery cells of a cell arrangement or cell module may be of particular advantage, as under such circumstances the local passivation of a plurality of battery cells may be achieved, i.e. without influencing and passivation of intact battery cells. On the other hand, there might occur situations wherein the group wise shut down may be of particular advantage, for instance in case of an accident where an entire battery has to be shut down. Both can be realized by embodiments of the present invention, in particular at the same time depending on the particular situation and its development in time.

The fast discharge and/or shut down process may be realized by different measures. According to a preferred embodiment of the present invention, a respective safety portion may be formed as or may comprise a fast discharge and/or shut down unit which is configured in order to be connectable or to be connected to battery cell terminals, in particular in parallel to an underlying electrochemical part or a plurality thereof.

Additionally or alternatively, a respective safety portion and its fast discharge and/or shut down unit may be configured in order to discharge an underlying battery cell or a plurality thereof electrically connected between said battery cell terminals under certain or first predetermined conditions, in particular by connecting said battery cell terminals via a resistor by means of a discharge switch element of the fast discharge and/or shut down unit.

The resistor underlying a respective fast discharge and/or shut down unit may be chosen according to the particular technical situation underlying the application of the battery.

Accordingly, the resistor of a respective fast discharge and/or shut down unit may be selected in order to cause the first current during a current flow through an underlying battery cell and the fast discharge unit to heat an electrochemical part of the underlying battery cell such that a separator of the underlying electrochemical part reaches a predefined temperature at which the separator passivates the electrochemical part.

Additionally or alternatively, the resistor of a respective fast discharge and/or shut down unit may be selected in order to avoid a thermal runaway of the underlying battery cell during the heating of the electrochemical part by the first current flowing through the electrochemical part and the fast discharge and/or shut down unit.

Of course such a processing when using a fast discharge and/or shut down unit is not mandatory. Instead, alternative fast discharge and/or shutdown processes may be involved using different underlying mechanisms.

Respective connector portions may be configured in order to electrically connect said plurality of battery cells or a part thereof in a series.

However, other connecting schemes within the plurality of battery cells are possible, too. One can think of group wise in series connected subsets of battery cells, with the groups being connected in parallel regarding external terminals.

In particular, a respective connector portion may be configured in order to electrically connect a first cell terminal of a first battery cell with a second cell terminal of a second battery cell.

The respective connector portions may be designed with respect to its geometry and/or with respect to its material in an appropriate manner always in view of the concrete technical context of its usage.

Thus, the connector portion may be formed from an electrically conductive material, in particular with or from a metal, and/or as a tab, strip, strap, bar, flip and/or a general plate-like element.

This general concept also applies to the safety portion.

Thus, a respective safety portion may be formed as an intermediate portion between the first connector portion and a second connector portion and configured to serve as an electric insulation in a non-activated state. Under such circumstances the plurality of connector portions forms the underlying electric conductive skeleton, wherein the safety portions of a certain kind of local insulation which - upon activation of the fast discharge and/or shut down units - is conditionally abolished in a controlled manner, e.g. driven by internal reasons of the battery cells and/or external circumstances, for instance an accident or an intended manual or automatic shutdown.

In order to further enhance the assembling process on the basis of a plurality of battery cells, a preferred embodiment of the connector and safety assembly according to the present invention may comprise a common support portion for commonly carrying and supporting the plurality of connector portions and the plurality of safety portions. Under such circumstances the connector and safety assembly can be handled as one piece.

Such a situation may be further supported by fixing the connector portions and the safety portions in a configuration and/or geometry ready for being attached to an underlying plurality of battery cells and its cell terminals and/or by embedding said connector portions and said safety portions. For instance, the connector and safety assembly with its connector portions and its safety portions may form together with the support the kind of cover configured to fit on an upper side of a cell module or a battery to thereby contact the non-contacted individual battery cells and establishing the respective safety means.

Further improvements can be achieved in view of an enhancement of the flexibility of the application to certain technical fields, if a respective safety portion comprises a control unit or is configured in order to be electrically connected or connectable - in particular by a trigger line - to a control unit for being conditionally activated or activatable.

The present invention further concerns a cell arrangement and in particular a cell module as such, each formed by a plurality of battery cells and comprising at least one connector and safety assembly according to the present invention configured to electrically connect said plurality of battery cells or a part thereof.

Of course a plurality of connector and safety assemblies may be provided under which the plurality of battery cells is distributed according to a prescribed scheme and depending on the respective technical application.

The individual battery cells of the underlying cell arrangement may be defined in different ways without departing from the gist of the present invention.

It is of particular advantage if a respective battery cell comprises first and second battery cell terminals for an external contact of the battery cell, e.g. within the cell arrangement or cell module, e.g. in connection with other neighboring battery cells of the plurality of battery cells, an electrochemical part, preferably formed as or comprising a jelly roll or an electrode stack configuration, connected to the battery cell terminals and/or a direct or indirect electric connection to a fast discharge and/or shut down unit of an underlying safety portion connected to the battery cell terminals in parallel to the electrochemical part and configured in order to discharge and/or to shut down the battery cell under first predetermined conditions by connecting the battery cell terminals via a resistor.

Additionally or alternatively, in a respective battery cell the electrochemical part may comprise a positive electrode, a negative electrode, an electrolyte component having a conductive salt component and a solvent component, and a separator.

The separator may be configured in order to become at least partially impermeable for ions generated inside of the electrochemical part upon reaching a predefined temperature. Such a process realizes a controllable and conditional passivation of a battery cell or a plurality thereof.

Within a few milliseconds after activation of a fast discharge and/or shut down the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be very fast discharged in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

According to a further aspect of the present invention a battery is provided which comprises one or a plurality of cell arrangements according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery individual fast discharge unit together with a respective control unit in particular with respective control parts and/or actuating and/or signaling parts.

Eventually the present invention also provides an apparatus and in particular a vehicle, comprising an operation part and an energizing part for energizing the operation part. According to the present invention the energizing part is or comprises one or a plurality of cell arrangements and/or one or a plurality of batteries, both according to the present invention.

### Brief description of the drawings

In the following section embodiments of the present invention are disclosed with reference to the enclosed figures.
- Figure 1: gives a schematic side view of an embodiment of the apparatus according to the present invention based on an embodiment of the battery cell according to the present invention and using the inventive operating concept for a battery cell and its fast discharge and/or shut down unit.
- Figure 2 and 3: schematically elucidate an embodiment of a cell arrangement according to the present invention wherein for clarity reasons the respective safety portions are omitted in order to make transparent the connector portions more clearly.
- Figures 4 to 13: schematically exemplify aspects of the connector and safety assembly according to the present invention, of the components and their applications.

### Embodiments of the present invention

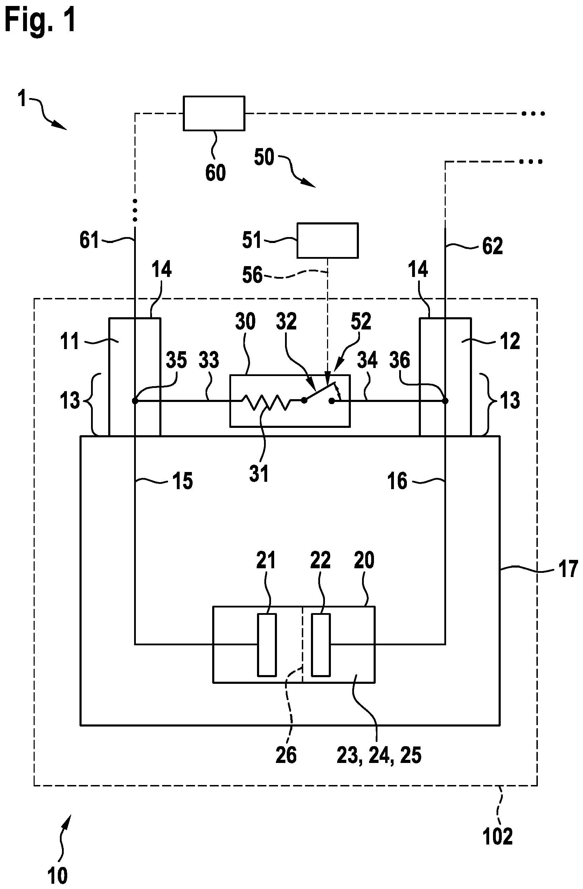

In the following, embodiments and the technical background of the present invention are described in detail by taking reference to accompanying figures 1 to 13. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention

Figure 1 gives a schematic side view of an embodiment of the apparatus 1 according to the present invention based on an embodiment of the battery cell 10 according to the present invention and using the inventive operating concept for a battery cell 10 and its fast discharge and/or shut down unit 30 as a part of the connector and safety assembly 40 according to the present invention.

Battery cell 10 shown in figure 1 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for directly or indirectly supplying electric power via supply lines 61, 62 to a load 60 in order to run a particular device providing the load 60 and/or for establishing an electric contact to neighboring battery cells 10 of a plurality of battery cells 10, for instance within a cell arrangement 110', a cell module 110 and/or a battery 100.

Each of the first and second battery cell terminals 11, 12 comprises a connection side part 13 for establishing a connection to the battery cell 10 and its terminal lines 15, 16 on the one hand and a fast discharge unit 30 to be described below on the other hand.

In addition, the first and second battery cell terminals 11, 12 also comprise an external side part 14 for being contacted either to respective supply lines 61, 62 connected to the load 60 or directly or indirectly to other battery cell terminals 11, 12 of neighboring battery cells 10.

In addition to the terminal lines 15, 16 for connecting the battery cell 10, at connection nodes 35, 36 discharge lines or contacts 33 and 34 are provided in the connection side part 13. For connecting to the connection side parts 13 of the first and second battery cell terminals 11, 12, the fast discharge unit 30 which is configured in order to perform a fast discharge of the battery cell 20 under certain conditions and in order to thereby avoid hazardous situations.

As shown schematically in figure 1, this may be done by operating a discharge switch or in general a discharge switching element 32 for closing the connection between the connection nodes 35 and 36 for discharging the battery cell 10 and its electrochemical part 20 via the serially enclosed discharge resistor 31 having an appropriate resistance value.

On the one hand, the resistance value of the resistor 31 is chosen in order to achieve a discharge of the battery cell 20 as fast as possible but simultaneously to avoid a thermal run away of the battery cell 10 and its electrochemical part 20.

In order to further support the safety aspects implemented by the fast discharge and shut down unit 30, a control unit 50 or an electric connection thereto is provided.

The control unit 50 is configured in order to trigger by the trigger line 56 and the trigger probe 52 the discharge switch 32 of the underlying fast discharge and/or shut down unit 30.

The operations of the fast discharge and/or shut down unit 30 on the one hand and of the control unit 50 on the other hand may be triggered by first and second predetermined conditions which may also be equal and/or which may depend on each other.

Via the trigger line 56 as an external connection, the control part 51 of the control unit 50 may be capable of conditionally initiating and operating the fast discharge and/or shut down unit 30.

Via connection with trigger line 56, the control part 51 and in particular the entire control unit 50 may be separated and externally be mounted with respect to the battery cell 10 and/or the fast discharge and shut down unit 30.

The conditions for operating the fast discharge and/or shut down unit 30 may be settled based on the conditions and on the operation state of the electrochemical part 20 of the battery cell 10 and - according to the present invention - additionally on external fast discharge and/or shut down conditions, for instance of other and spatially separated battery cells 10, other modules 110 of batteries 100.

According to the present invention the fast discharge and/or shutdown unit 30 cannot only be triggered internally but also by measures which are in relation to the battery cell 10, the module 110 and the battery 100 situated externally.

As is elucidated in the following, the apparatus 1 according to figure 1 is only a schematic representation as it does not explicitly show the actually provided plurality of single battery cells 10. However, figure 1 serves to better elucidate the fast discharge and/or shut down aspects realized by the fast discharge and/or shut down unit 30 connected to the cell terminals 11 and 12.

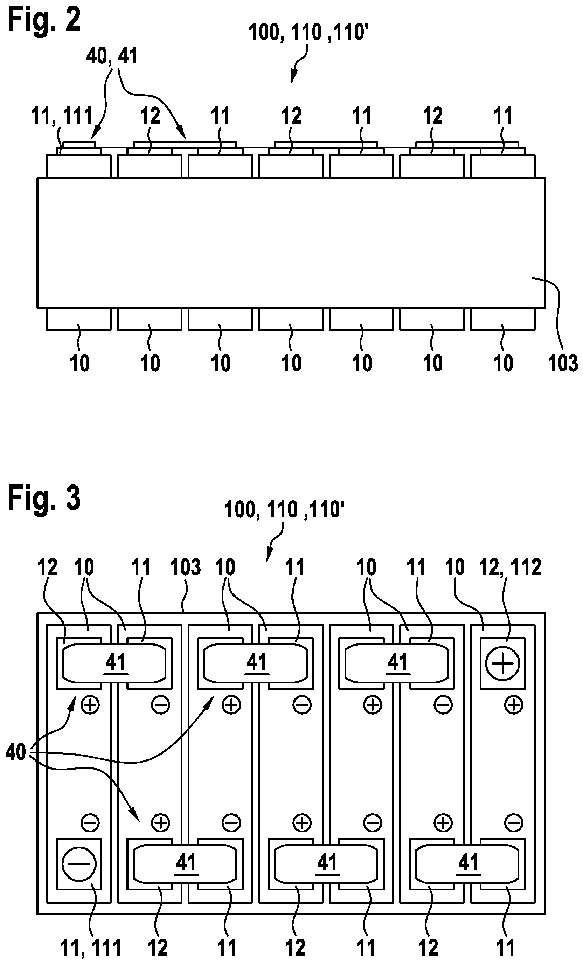

Figure 2 and 3 schematically elucidate an embodiment of a cell arrangement 110' according to the present invention wherein for clarity reasons the respective safety portions 42 are omitted in order to make transparent the connector portions 41 of the connector and safety assembly 40 according to the present invention more clearly.

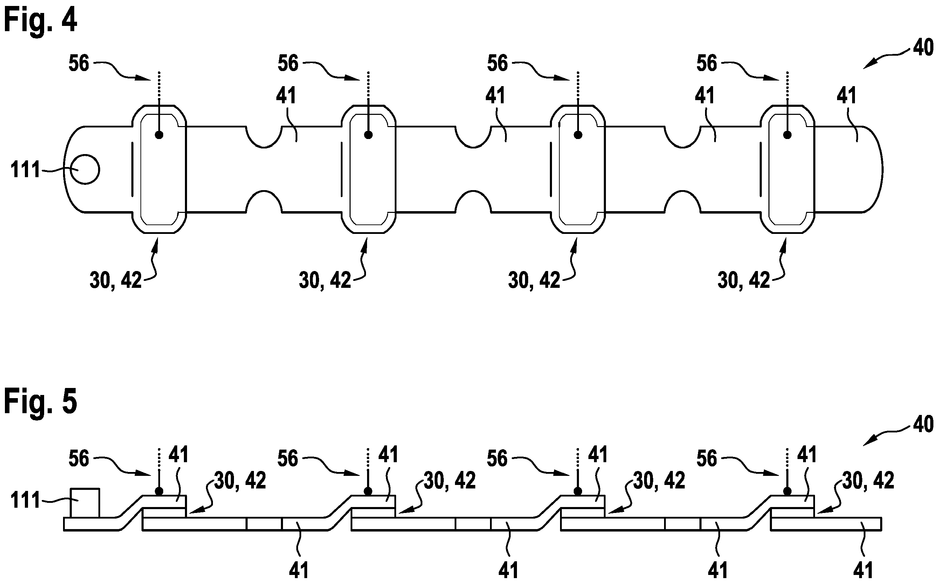

Figures 4 to 13 schematically exemplify aspects of the connector and safety assembly 40 according to the present invention, of the components and their applications.

In all the batteries 100, cell arrangements 110' and cell modules 110, each plurality of battery cells 10 may be embraced by a frame 103 for stability reasons.

Each battery cell 10 may have a first cell terminal 11 and a second cell terminal 12, e.g. assigned to negative and positive electrodes of the underlying battery cell 10 and its electrochemical part 20.

First and second terminal cells 11 and 12 of leading battery cells 10 in the arrangement 110' may also serve as first and second module terminals 111 and 112, respectively.

Some of the embodiments of the connector and safety assembly 40 having respective connector portions 41 and safety portions 42 may be equipped with an embedding support of frame 43.

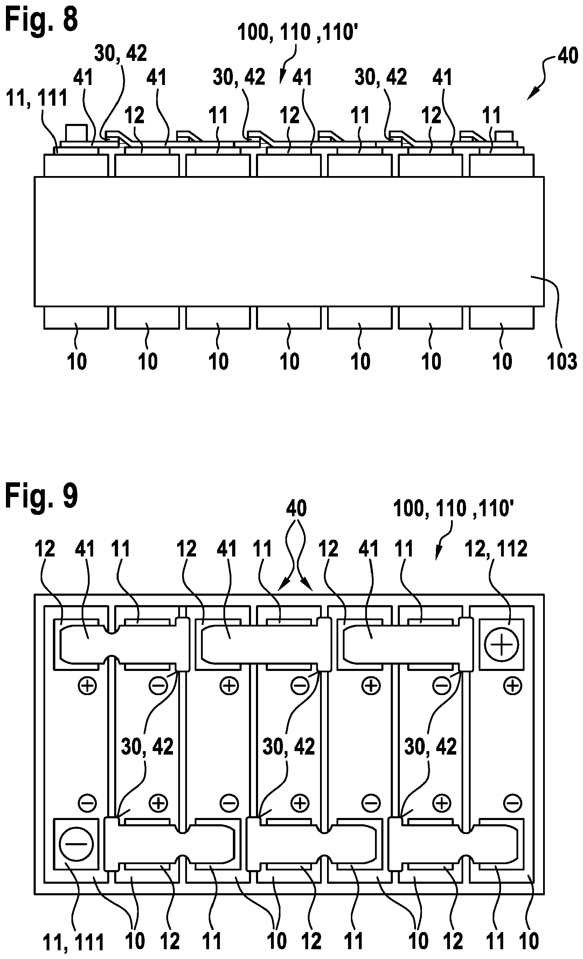

Some of the embodiments of the connector and safety assembly 40 according to the present invention may give a connection of battery cells 10 with a pairwise short-circuiting capability, as for instance shown in figures 8 and 9.

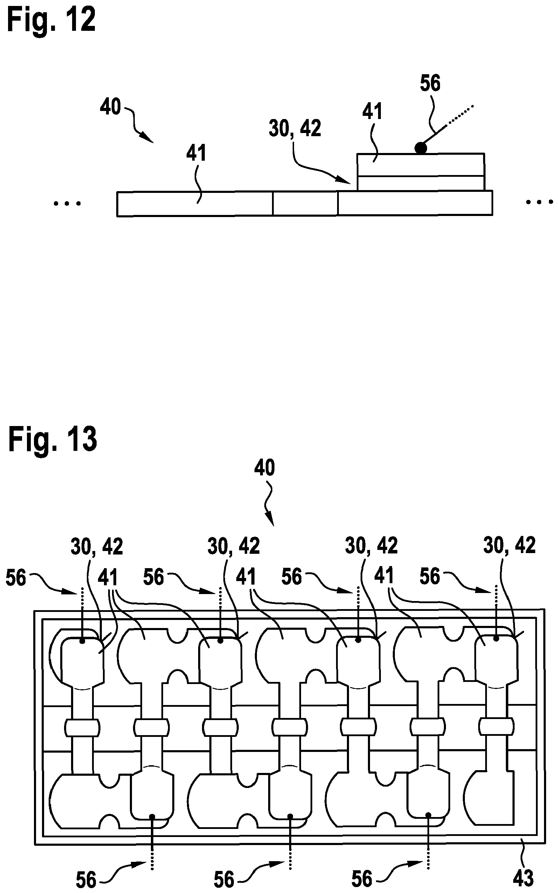

On the other hand there are embodiments for connector and safety assemblies 40 according to which an individual short-circuiting capability for each of the battery cells 10 is realized, as for instance shown in figure 13.

These and further features, properties and advantages of the present invention will be further discussed in the following:
Lithium ion cells 10 are increasingly being used for the construction of batteries 100 for electric traction or other applications apparatuses 1.

Usually, the battery cells 10 may be used in series connection, for which purpose the cells 10 are also mechanically combined into several cells in the most compact form possible. The following embodiment relates to so-called prismatic cells with a fixed, dimensionally stable housing of frame 103.

In principle, they are also applied to round cells or so-called pouch cells, i.e. to flat electrode arrangements in one polymer-aluminum-composite sheet or the like.

Prism shaped cells 10 may be placed in alternating alignment with the largest surface relative to one another and then installed in a module 110 or arrangement 110'.

The electrical contacts 11, 12 of the cells 10 lying at the opposite ends of another neighboring cell 10 or at the opposite ends of the cell cover then come to one another in such a way that the negative contact 11 of a cell with a relatively short cell connector to the positive contact 12 of the next cell 10 can be connected.

This is demonstrated in figures 2 and 3 by neglecting the safety portions 42 of the connector and safety assembly 40.

Thus, in each case, individual components are used as connectors 41 of the connector and safety assembly 40 for the cells 10.

As a rule one may have as many individual cell connector portions 42 as the number of individual cells 10 the underlying module 110 or arrangement 110' has reduced by 1.

In order to accelerate the assembly of modules 110, assemblies 110' of individual battery cells 10 are used, in which the individual cell connector 42, which must be installed in a module 110 at the end, are already pre-assembled in a plastic frame 43 and therefore, when this frame is placed on the cells 10 and combined into a module 100 they fit into a correct position and only have to be fixed onto the cells 10, for instance by welding or the like.

The further development of the lithium-ion cell technology leads to a further increase in the energy density in the cells and thus the cells can get into an uncertain state due to the occurrence of internal short-circuits. One way of counteracting this risk associated with the increase in the specific energy is the use of rapid discharging devices which are also called fast discharge and/or shut down units 30 which, upon identification of an abnormal behavior of the cells 10, cause a discharge of the same with a high current and/or a passivation of the underlying electrochemical parts 20.

The basic function of the fast discharge and/or shut down unit 30 and its application to a cell 10, cell module 110, cell arrangement 110' or even in a battery 100 is described, inter alia, in the context of figure 1.

The function of the switch 32 is that it must be electrically connected to the two electrodes 21 and 22 of the underlying battery cell 10, for instance a lithium ion cell 10, and more preferably its terminal lines 15, 16 or even the battery cell terminals 11, 12 with the least possible resistance.

As a rule, the connection may take place from the outside to the cell 10, i.e. to the poles of the cell 10. Thus, the cell connectors 42 for establishing the series connection of the cells 10 as well as the connection of the fast-discharge switches 32 of the fast discharge and/or shut down units 30 to the cell terminals 11, 12 must be connected.

In order to achieve a very low transition resistance, the parts are welded together.

The use of a fast-discharge switch 32 as a parallel path to one cell 10 is usually proposed. The type of the switch itself can operate according to different principles, then semiconductor switches or also electromechanical switches are proposed for the realization of the rapid discharge.

In particular, this is based on the use of special switches which are based on the principle of soldering two metallic conductors by igniting a reactive film integrated in the switch, which acts as an energy store. These switches are referred to as anti-fuse elements.

One object underlying the present invention is the adaptation of the discharge current of underline battery cells 10 during a fast discharge and/or shut down process without making the assembly process to complex.

Since very high currents have to be passed through the fast discharge and/or shut down switches 32 in the discharge process and high heat losses occur at the actual point of the circuit, the supply lines must also fulfill the function of the heat sink in addition to the function of the current line.

Therefore, according to known configurations, they must be sufficiently large and heavy. This, of course, is at the expense of the specific energy of the module.

By using the invention, the shortest possible leads, if possible, are to be achieved by using a switch for the rapid discharge.

This allows an increase in the specific energy on the module plane. In addition, the heat dissipation of the fast discharge device is achieved via the thermal mass of the cell connectors 42. This also leads to the fact that the switching elements 32 or their feed lines 33, 34 can be designed to be smaller and, above all, lighter.

The integration of the switching elements 32 or of the entire fast discharge and/or shut down units 30 as safety portions 42 in a mechanical connection with the adjacent cell connectors 41 before the assembly results in a fixation of the parts during assembly.

In addition, the cell connectors 41 and quick-discharge switches 32 are connected to the cell 10 in one step with the same welding. Therefore, a saving of assembly costs is achieved.

One key aspect of the present invention is the mechanical connection and/or integration of a rapid discharge switch 32 or of the entire fast discharge and/shut down unit 30 as a safety portion 42 to the cell connectors 41, in particular in an alternating arrangement.

Typically, this alternating arrangement is linear, i.e. switching elements 32 and cell connectors 41 may be arranged in series along an axis.

The cell arrangement 110' is selected in such a way that the contact points of the cell connectors 41 of such an arrangement are located precisely on the poles or planar cell terminals 11, 12 of the cells 10 arranged for the module assembly, as inter alia exemplified in figures 4 to 9.

Thus, the cell connectors 41 which electrically connect two cells 10, are directly and conductively connected to the switching elements 32, which are then each provided for the rapid discharge of two cells 10 connected in series. The cell connector 41 and the electrical leads 33, 34 to a fast discharge and/or shut down unit 30 can then even be made as a contiguous metal part, is for instance indicated in figures 4 and 5.

The mechanical connection of the switching elements 32 with the cell connectors 41 also ensures a good thermal connection of the current conductors for the rapid discharge to the cell connectors 41 which are also designed for higher currents. As a result, the thermal capacity of the cell connectors 41 can be used for the cooling of the switching elements 32, which means that the current conductors for the safety switches can be made smaller and lighter. Thus an increase in the specific energy and also the energy density is achieved.

In each case, two cells 10 are jointly electrically combined into a composite for the possible high-speed discharge. The linear and/or alternating arrangement of the fast-discharge switches 32 and of the cell connector 41 is designed as a single mechanically sufficiently stable component, as is inter alia demonstrated in figures 4 and 5.

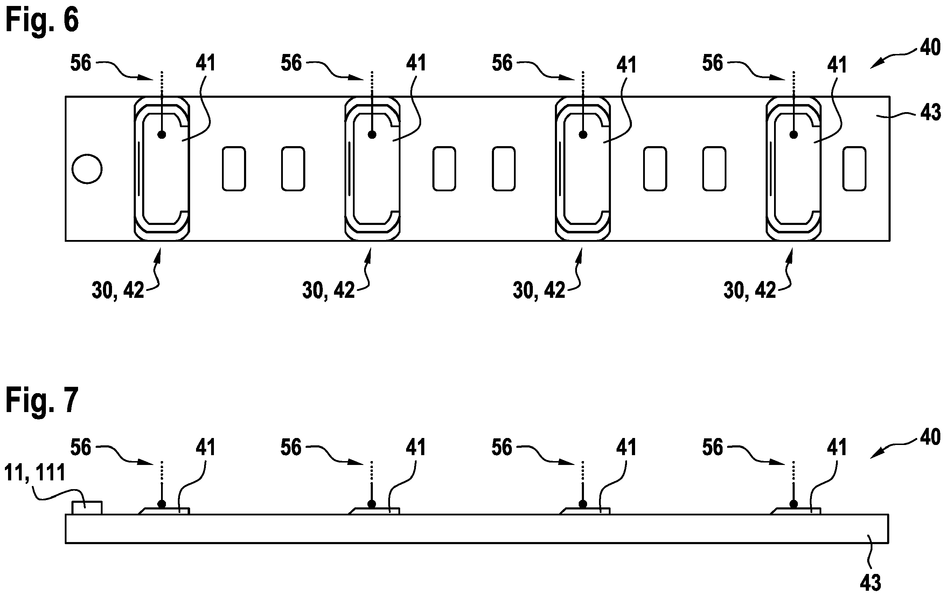

By an additional housing, support or frame 43 or the like, e.g. plastic part or overmoulding with plastic, more or less completely, the rail can additionally be mechanically stabilized and also be electrically insulated, almost completely or partly, as is inter alia exemplified in connection with figures 6 and 7. This is then placed on the row of neighboring cell terminals or poles 11 and 12 like a current rail and welded, screwed or riveted to the cell terminals or poles 11 and 12.

The application of the device 40 can be carried out, in particular, in the construction of modules 110 with an odd number of cells 10.

In this case, two identical connecting rails 40 can then be used, which must be assembled only in the opposite orientation to the module 110, as is demonstrated for instance in connection with figures 8 and 9.

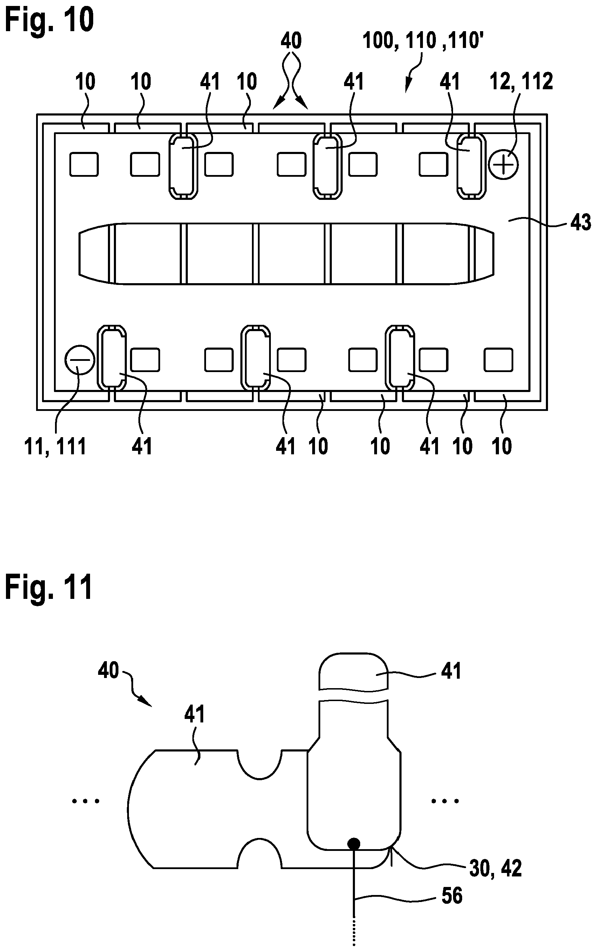

In a variant, the two linear arrangements 40 are held in a frame 43 so that the respective contacts lie on the cell terminals 11, 12. In this case, all the cell connectors 41 and switching elements 32 are already fixed in position relative to each other before assembling into a module 110 into a component. This is for instance shown in connection with figure 10.

In addition to the mechanical stabilization and facilitation of the assembly, an electrical insulation can also be achieved by the integration of the two connecting rails, so that the contact between the voltage-carrying parts during assembly or also in the subsequent application can be prevented either completely or partly depending on the design of the frame 43, if necessary.

The use of protective caps in order to cover the weld areas after assembly may be possible.

The heat connection of the switching elements 32 to the overall unit results in an improved cooling of the switching elements 32 into the cell connectors 41 which are mechanically and thermally connected thereto and, furthermore, into the adjacent cells 10. When using a mounting frame 43 - as shown for instance in connection with figures 6, 7, and 10, this improves the thermal connection of the switching element 32.

Additional plastic support surfaces may be provided in the area of the actual quick-release switch.

If the rapid discharge is to be effected in each case via a single cell 10, a modification of the invention may be possible where at least the direct electrical and mechanical connection of the cell connectors 41 to the rapid discharge switches 32 is effected and the direct thermal connection of the rapid discharge switches 32 to the cell connectors 41 is maintained, for example by an angled design and/or with a design in L form as shown in figures 11 to 13.

But also in this case preassembly of the elements for the cell connection 41 and its electrically conductive connection to the fast discharge and/or shut down units 30 in a top frame 43 is possible, as shown in connection with figure 13.

Figure 2 and 3 demonstrate a typical application of the present invention to prismatic lithium ion cells 10 in a module 110 viewed from the side on the module 110 and viewed from above on the module 110, respectively. The battery cells 10 on the cell surface symbolize the planar cell terminals 11, 12 or the poles of the cell, the surface of which is typically made of aluminum or an aluminum alloy.

Figure 4 and 5 exemplify a linear arrangement and alternating arrangement of fast discharge and/or shut down units 30 as safety portions 42 and of connector portions 41. Metallic conductors provided for the electrical connection of the cell 10 are extended and used as a lead for the fast-charging switches 32. Figure 4 gives a view from above and figure 5 establishes a view from the side. An optional plastic frame 103 for the stabilization of the arrangement 110' embraces the cells 10.

Figure 6 and 7 demonstrate a linear arrangement and alternating arrangement of the fast discharge and/or shut down units 30 and cell connector portions 41. The arrangement is enclosed in a plastic frame 43 and thus is mechanically stabilized. Figure 6 gives view from above. Figures 7 gives a side view.

Figure 8 and 9 demonstrate examples of an arrangement of the device similar to that shown in figures 2 and 3 and described in the construction of a module 110 of prismatic lithium ion cells 10. The embodiment shown in figure 8 is viewed from the side, whereas the embodiment shown in figure 9 is viewed from above on the module 110.

Figure 10 demonstrates an exemplary structure of the described device in a module 110 of prismatic lithium ion cells 10 in which the two linear arrangements of switches 32 and cell connectors 41 are preassembled and pre-fixed in a frame 43 prior to connection to the cells 10. This schematic view shows arrangements from above. The cell connectors 41 are not visible here and the recesses are then welded in the frame 43 to the cell terminals 11, 12.

Figures 11 and 12 exemplify a segment of a modified device for connecting two adjacent prismatic lithium ion cells 10 in a module 110 with a view from above according to figure 11 and with a view from the side according to figure 12.

The one line of the fast discharge switch 32 is the cell connector 41 to the adjacent cell 10. The switching element 32 therefore heats directly into the cell connector 41 and thus also into the adjacent cell 10. The contact to the second cell pole 12 is established via the second line of the fast discharge switch 32.

Figure 13 shows an example of the modified device with the arrangement of prismatic lithium ion cells 10 in a module 110 or arrangement 110' wherein the fast discharge switch 32 is connected on one side to the cell connector 41 to the negative pole 11 and the derivative of the fast discharge switch 32 is connected to the positive cell terminal or pole 12 on the cell housing 17 connected to the positive cell terminal or pole 12. All surfaces for contacting the cell terminals are on the same level.

## Claims

1. Connector and safety assembly (40) for a plurality of battery cells (10) and in particular for a cell arrangement (110') or a cell module (110)
- comprising connector portions (41) configured in order to electrically connect said plurality of battery cells (10) or a part thereof to first and second terminals (111, 112) and
- comprising safety portions (42) configured in order to conditionally and controllably short-circuit battery cell terminals (11, 12) of battery cells (10) in order to thereby achieve upon activation a fast discharge and/or shut down of one or a plurality of respective battery cells (10),
wherein the connector and safety assembly (40) is formed as a single and common unit for said plurality of battery cells (10).

2. Connector and safety assembly (40) according to claim 1,
wherein said safety portions (42) are configured and arranged in order to achieve a fast discharge and/or shut down of battery cells (10) by short-circuiting said battery cells (10) in a group wise, pairwise and/or individual manner.

3. Connector and safety assembly (40) according to any one of the preceding claims,
wherein a respective safety portion (42) is formed as or comprises a fast discharge and/or shut down unit (30) which is configured
- in order to be connectable or to be connected to battery cell terminals (11, 12) - in particular in parallel to an underlying electrochemical part (20) or a plurality thereof - and/or
- in order to discharge a battery cell (10) or a plurality thereof electrically connected between said battery cell terminals (11, 12) under certain or first predetermined conditions, in particular by connecting set battery cell terminals (11, 12) via a resistor (31) by means of a discharge switch element (32) of the fast discharge and/or shut down unit (30).

4. Connector and safety assembly (40) according to claim 3, wherein the resistor (31) of a respective fast discharge and/or shut down unit (30) is selected in order
- to cause the first current during a current flow through an underlying battery cell (10) and the fast discharge unit (30) to heat an electrochemical part (20) of the underlying battery cell (10) such that a separator (26) of the underlying electrochemical part (20) reaches a predefined temperature at which the separator passivates the electrochemical part (20) and/or
- to avoid a thermal runaway of the underlying battery cell (10) during the heating of the electrochemical part (20) by the first current flowing through electrochemical part (20) and the fast discharge and/or shut down unit (30).

5. Connector and safety assembly (40) according to any one of the preceding claims, wherein
- respective connector portions (41) are configured in order to electrically connect said plurality of battery cells (10) or a part thereof in a series and
- in particular a respective connector portion (41) is configured in order to electrically connect a first cell terminal (11) of a first battery cell (10) with a second cell terminal (12) of a second battery cell (10).

6. Connector and safety assembly (40) according to any one of the preceding claims, wherein
- a connector portion (41) is formed from an electrically conductive material, in particular with a metal, and/or as a tab, strip, strap, bar, flip and/or a general plate-like element and/or
- a respective safety portion (42) is formed as an intermediate portion between the first connector portion (41) and a second connector portion (41) and configured to serve as an electric insulation in a non-activated state.

7. Connector and safety assembly (40) according to any one of the preceding claims,
- comprising a common support portion (43) for commonly carrying and supporting the plurality of connector portions (41) and the plurality of safety portions (42),
- in particular by fixing the connector portions (41) and the safety portions (42) in a configuration and/or geometry ready for being attached to an underlying plurality of battery cells (10) and its cell terminals (11, 12) and/or by embedding said connector portions (41) and said safety portions (42).

8. Connector and safety assembly (40) according to any one of the preceding claims,
wherein a respective safety portion (42) comprises a control unit (50) or is configured in order to be electrically connected or connectable - in particular by a trigger line (56) - to a control unit (50) for being conditionally activated or activatable.

9. Cell arrangement (110') and in particular cell module (110) of a plurality of battery cells (10),
comprising at least one connector and safety assembly (40) according to any one of the claims 1 to 8 electrically connecting said plurality of battery cells (10) or a part thereof.

10. Cell arrangement (110') according to claim 9, wherein a respective battery cell (10) comprises.
- first and second battery cell terminals (11, 12) for an external contact of the battery cell (10),
- an electrochemical part (20), preferably formed as or comprising a jelly roll or an electrode stack configuration, connected to the battery cell terminals (11, 12) and/or
- a direct or indirect electric connection to a fast discharge and/or shut down unit (30) of an underlying safety portion (42) connected to the battery cell terminals (11, 12) in parallel to the electrochemical part (20) and configured in order to discharge and/or to shut down the battery cell (10) under first predetermined conditions by connecting the battery cell terminals (11, 12) via a resistor (31).

11. Cell arrangement (110') according to claim 10, wherein in a respective battery cell (10)
- the electrochemical part (20) comprises a positive electrode (21), a negative electrode (22), an electrolyte component (23) having a conductive salt component (24) and a solvent component (25), and a separator (26) and
- the separator (26) is configured in order to become at least partially impermeable for ions generated inside of the electrochemical part (20) upon reaching a predefined temperature,

12. Battery (100), comprising one or a plurality of cell arrangements (100') according to any one of claims 9 to 11.

13. Apparatus and in particular vehicle, comprising:
- an operation part and
- an energizing part for energizing the operation part,
wherein the energizing part is or comprises one or a plurality cell arrangements (101') according to any one of claims 9 to 11 and/or one or a plurality of batteries (100) according to claim 12.
